# EUROPÄISCHE PATENTSCHRIFT

(11) **EP 2 628 937 B1**
(45) Veröffentlichungstag und Bekanntmachung des Hinweises auf die Patenterteilung: **24.06.2020**
(21) Anmeldenummer: 12007016.4
(22) Anmeldetag: 10.10.2012
(51) Int. Cl.: F02M 37/00

(54) **ABDECKHAUBE AM AUSSENUMFANG EINES BETRIEBSSTOFFTANKS**
COVER ON THE OUTER CIRCUMFERENCE OF A FUEL TANK
CAPOT DE RECOUVREMENT SUR LA CIRCONFÉRENCE EXTERNE D'UN RÉSERVOIR DE CARBURANT

(30) Priorität: 16.02.2012 AT 1932012
(43) Veröffentlichungstag der Anmeldung: 21.08.2013
(73) Patentinhaber: MAN Truck & Bus Österreich AG, 4400 Steyr (AT)
(72) Erfinder: Bruckschwaiger, Daniel, 3361 Aschbach (AT)
(74) Vertreter: v. Bezold & Partner Patentanwälte - PartG mbB

(56) Entgegenhaltungen:
- EP-A1- 0 816 151
- EP-A1- 0 959 242
- DE-A1- 2 440 904
- DE-A1-102007 059 826
- JP-A- H03 255 211
- JP-A- S62 237 155
- US-A- 2 530 357
- US-A- 4 741 453
- US-A1- 2008 035 120

## Beschreibung

Die Erfindung betrifft eine Haube zur Abdeckung einer am Außenumfang eines Betriebsstofftanks angeordneten Einrichtung zur Betriebstoffversorgung nach dem Oberbegriff des Anspruchs 1.

Das Dokument US2008/0035120 A1 beschreibt eine Haube zur Abdeckung einer am Aussenumfang eines Betriebsstofftanks angeordneten und eine Tankwand durchdringenden Einrichtung zur Betriebsstoffversorgung.

Das Dokument US 4,741,453 beschreibt ein Gefäß mit röhrenförmiger Seitenwand und einem fest mit der Seitenwand über U-förmige Anschlussstellen verbundenen Boden, wobei der Anschluss zwischen Boden und Seitenwand versiegelt ist, sowie einem Anschlussring am oberen Ende der Seitenwand, an dem ein Deckel mittels einer an dem äußeren Rand des Deckels angebrachten Schraubverbindung von außen befestigt werden kann.

Das Dokument EP 0 959 242 A1 beschreibt einen Kraftfahrzeugtank mit einer Bodenwand und einer mit einer Öffnung versehenen oberen Wand. Die Öffnung kann eine Platte abgedichtet aufnehmen. Dazu wirkt ein Außengewinde am Kraftfahrzeugtank mit einem Innengewinde an einem Schraubverschluss zusammen. Der Schraubverschluss liegt ausschließlich oberseitig auf der Platte an, so dass die Platte axial gegen einen die Öffnung umschließenden Dichtungsring des Kraftfahrzeugtanks gepresst wird.

Aus der DE 199 29 986 C2 ist ein Kraftstofftank bekannt, der eine Kraftstoffentnahmevorrichtung aufweist. Eine tankbodennahe Entnahmestelle ist über eine Vorlaufleitung mit einer Kraftstoffpumpe verbunden. In der oberen Tankwand ist ein Durchführungsflansch angeordnet, der den Kraftstoff aus dem Inneren des Tanks heraus dem Verbrennungsmotor zuführt. Nachteilig an dem bekannten Betriebsstofftank ist, dass die Einrichtung, die den Betriebsstofftank mit Betriebstoff versorgt oder den Verbrauchereinheiten Betriebstoff zuführt, in der Regel am Außenumfang des Betriebsstofftanks angeordnet ist. Die Versorgungseinrichtungen, z.B. Pumpen oder Ventile, verschmutzen durch Spritzwasser oder werden durch aufgewirbelte Steine mechanisch beschädigt. Ein weiterer Nachteil besteht darin, dass die Versorgungseinrichtungen bei niederen Außentemperaturen vereisen können.

Der Erfindung liegt daher die Aufgabe zugrunde, eine Vorrichtung zu schaffen, die die Einrichtungen zur Betriebstoffversorgung eines Betriebsstofftanks vor den genannten Beschädigungen schützt und gleichzeitig Wartungs- und Reparaturarbeiten ermöglicht.

Die Aufgabe wird durch die Merkmale des Anspruchs 1 gelöst.

Am Außenumfang eines Betriebsstofftanks ist eine Haube vorgesehen, die der Abdeckung einer Versorgungseinrichtung dient. Die Versorgungseinrichtung ist am Außenumfang des Betriebsstofftanks angebracht und durchdringt eine Tankwand ins Tankinnere. Die Haube liegt dabei mit einer Öffnung auf der Tankwand auf. An der Außenseite des Betriebsstofftanks ist ein Flansch vorgesehen, der die Versorgungseinrichtungen radial umgreift. Im verbauten Zustand liegt die Haube außen auf dem Betriebsstofftank auf und umfasst den Flansch radial mit einer Haubenwand. Erfindungsgemäß ist eine Verschlussvorrichtung vorgesehen, die im Bereich der Öffnung der Haube am Außenumfang der Haube an deren Außenwand anliegt und die Haubenwand an den Flansch anpresst. Im Folgenden wird davon ausgegangen, dass die Verschlussvorrichtung ein Sprengring ist. Im Weiteren entspricht die Außenwand der Haube der Haubenwand. Die Haube hat einen runden oder ovalen Querschnitt und weist auf der von der Öffnung der Haube abgewandten Seite einen Haubenboden auf. Der Durchmesser der Haubenöffnung und die Höhe der Haubenwand zwischen Haubenöffnung und Haubenboden sind abhängig vom räumlichen Umfang und der Größe der Einrichtung zur Betriebstoffversorgung an der Außenseite der Tankwand. Die Haube kann aus Metall oder Kunststoff gefertigt sein. Sie sitzt erfindungsgemäß außen auf der Tankwand des Betriebsstofftanks und umgreift mit der Haubenwand radial den Flansch des Betriebsstofftanks. Auf diese Weise wird verhindert, dass Schmutz oder Feuchtigkeit an die Einrichtung zur Betriebstoffversorgung gelangt. Im Inneren der Haube können zusätzlich Heizwendel angeordnet sein, die eine Vereisung der Versorgungseinrichtung verhindern. Die Haube kann unabhängig vom jeweiligen Inhalt des Betriebsstofftanks (z.B. Kraftstoff oder Flüssigkeiten zur Abgasreinigung) auf Tankbehältern aus Kunststoff, Metall oder jedem anderen Fertigungsmaterial angebracht werden. Der Vorteil der Erfindung besteht darin, dass die Haube Einrichtungen, die der Betriebstoffentnahme oder der Befüllung des Tanks mit Betriebstoff dienen und die an der Außenseite des Betriebsstofftanks angeordnet sind vor Verschmutzung oder mechanischer Beschädigung schützt. Eine Vereisung der Einrichtung zur Betriebstoffversorgung wird dadurch verhindert, dass Feuchtigkeit an der Außenseite der Haube abgeführt wird. Ein weiterer Vorteil der erfindungsgemäßen Haube besteht darin, dass die Haube zur Abdeckung von Sensoren und empfindlichen Aktoren verwendet werden kann. Ein zusätzlicher Vorteil besteht darin, dass die Haube Messeinrichtungen, die für die Wartung des Fahrzeugs erforderlich sind, wie z.B. Abschmiernippel oder Ölmessstäbe vor Verschmutzung und Vereisung schützt. Der Sprengring dient dazu, die Haube axial und formschlüssig verliersicher auf dem, an der Außenseite der Tankwand angeordneten Flansch zu befestigen. Der Sprengring kann aus einem Federstahldraht mit gleichbleibendem Querschnitt gefertigt sein. Zusätzlich ist es denkbar, am Sprengring eine Nase anzuordnen, die den Sprengring in einer am Außenumfang der Haubenwand vorgesehenen Nut fixiert. Der Sprengring verhindert, dass sich die Haube, während der Fahrt durch Erschütterungen vom Flansch des Betriebsstofftanks ablöst.

Eine andere Ausführungsform der Erfindung sieht vor, dass im Bereich der Haubenöffnung am Außenumfang der Haube eine, den Sprengring aufnehmende Nut vorgesehen ist. An wenigstens einer Stelle des Sprengrings kann eine Sicherungsnase angeordnet sein, die radial nach innen zum Zentrum des Sprengrings weist und die im verbauten Zustand in eine Aussparung der Haubenwand eingreift. Der Sprengring stellt eine verliersichere Fixierung der Haube am Flansch des Betriebsstofftanks sicher. Die Anordnung der Sicherungsnase am Sprengring ermöglicht darüber hinaus eine verrutschsichere Anordnung des Sprengrings an der Haubenwand.

Alternativ ist es vorstellbar, dass die Verschlussvorrichtung als Rasterband ausgebildet ist.

Eine weitere Ausführungsform der Erfindung sieht vor, dass im Bereich der Nut am Innenumfang der Haube ein Wulst vorgesehen ist. Der Wulst kann im Querschnitt abgerundet sein oder eine eckige Form aufweisen.

In einer anderen vorteilhaften Ausführungsform der Erfindung ist am Außenumfang des Flansches eine umlaufende Nut vorgesehen, die mit dem Wulst kommuniziert. Der Wulst kann ein umlaufender gummielastischer Dichtungsring sein, der das Innere der Haube gegen von außen eindringende Feuchtigkeit oder Schmutz abdichtet. Ein flexibler Dichtungsring verstärkt den Halt der Haube an dem an der Außenseite der Tankwand angeordneten Flansch.

Erfindungsgemäss ist an der Außenwand der Haube wenigstens ein weiterer Flansch angeordnet ist, der jeweils einen Durchbruch in der Außenwand der Haube radial umgreift. Der Durchbruch und der weitere Flansch können an der Haubenwand oder auch am Haubenboden vorgesehen sein. Im Inneren der Haube sind Transportleitungen an die Einrichtung zur Betriebstoffversorgung angebunden, die in das Tankinnere hineinragt. Die Transportleitungen ragen durch den Durchbruch in der Haubenwand und durch den weiteren Flansch hindurch aus der Haube heraus und sind auf der Außenseite der Haube z.B. mit den Betriebstoff verbrauchenden Einheiten verbunden. Zu Wartungszwecken ist die Haube von dem Flansch, der am Außenumfang des Betriebsstofftanks angebracht ist, ablösbar und mit ihrem weiteren Flansch auf den Transportleitungen verschiebbar. Der weitere Flansch erweist sich als vorteilhaft, da die Haube vom Flansch des Betriebsstofftanks abgelöst werden kann, ohne zusätzlich die Transportleitungen von der Einrichtung zur Betriebstoffversorgung abtrennen zu müssen.

Erfindungsgemäss weist der weitere Flansch an seiner vom Haubenboden abgewandten Seite einen axialen Spalt auf. Der weitere Flansch kann aus Metall oder aus Kunststoff gefertigt sein und mit einem Verbindungsmechanismus ausgerüstet sein, der den Spalt geschlossen hält. Durch den Spalt kann der weitere Flansch für die Montage oder während Reparaturarbeiten aufgeweitet werden und gleichzeitig die Haube über den weiteren Flansch auf den Transportleitungen verschoben werden.

Eine zusätzliche Ausführungsform der Erfindung sieht vor, dass sich in der Haubenwand ein Ausschnitt erstreckt, der in einem Winkel zur Öffnung der Haube verläuft und die Nut durchsetzt. Der Ausschnitt kann unterschiedlich breit ausgebildet sein und ermöglicht der Haube, weitere Transportleitungen zu übergreifen, die in einem horizontalen Abstand zu dem Flansch verlaufen, der an der Außenwand des Betriebsstofftanks befestigt ist.

Die Erfindung wird in der Folge anhand der in der Zeichnung dargestellten Ausführungsbeispiele näher erläutert. Dabei zeigen:
- Fig. 1: seitlich geschnitten eine auf dem Flansch befestigte Haube,
- Fig. 2: in perspektivischer Darstellung eine auf dem Flansch aufgesetzte Haube,
- Fig. 3: in perspektivischer Darstellung eine zum Flansch beabstandete Haube und
- Fig. 4: seitlich geschnitten einen Flansch des Betriebsstofftanks.

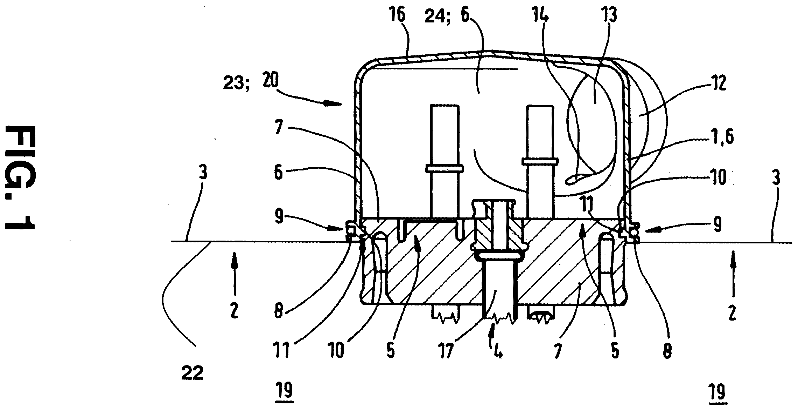

Fig. 1 zeigt seitlich geschnitten eine Haube (1) zur Abdeckung einer Einrichtung zur Betriebstoffversorgung (4), die am Außenumfang (22) eines Betriebsstofftanks (2) angeordnet ist. Die Haube (1) liegt mit einer Öffnung (5) auf einer Tankwand (3) auf und umgreift radial außen mit einer Außenwand (6) einen am Außenumfang (22) des Betriebsstofftanks (2) angeordneten Flansch (7). Am Außenumfang (23) der Haube (1) ist im Bereich der Haubenöffnung (5) eine Nut (9) vorgesehen, in die ein Sprengring (8) eingreift, der die Haube (1) von außen radial an den Flansch (7) des Betriebsstofftanks (2) anpresst. Im Inneren der Haube (1) durchsetzt ein Steig-/Fallrohr (17) der Einrichtung zur Betriebstoffversorgung (4) die Tankwand (3) und dringt in eine Tankinnenseite (19) ein. Auf der Rückseite der Haube (1) ist ein weiterer Flansch (12) erkennbar, der einen Durchbruch (13) in der Haubenwand (6) radial umgreift. An der Seite des weiteren Flansches (12), der einem Haubenboden (16) zugewandt ist, ist ein axialer Spalt (14) erkennbar, der eine Aufweitung des weiteren Flansches (12) ermöglicht. Am Innenumfang (24) der Haube (1) verläuft im Bereich der Haubenöffnung (5) ein Wulst (10), der im verbauten Zustand (20) mit einer am Außenumfang des Flansches (7) umlaufenden Nut (11) kommuniziert. Die Haube (1) wird durch die Haubenwand (6) und den die umlaufende Außenwand (6) gegenüber der Haubenöffnung (5) abschließenden Haubenboden (16) abgegrenzt.

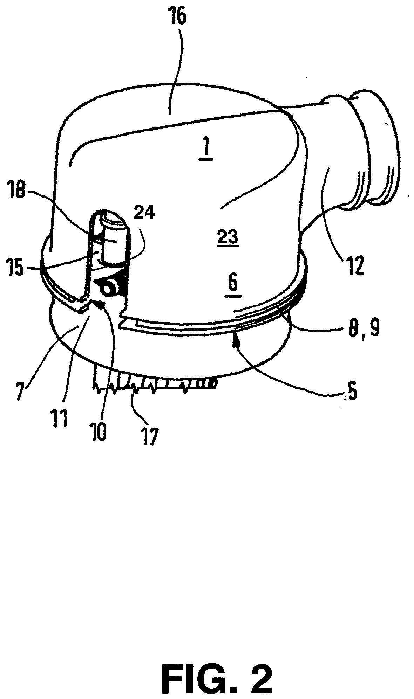

Fig. 2 zeigt in perspektivischer Darstellung die Haube (1) mit ihrer Außenwand (6) und dem von der Haubenöffnung (5) beabstandeten Haubenboden (16). Seitlich an der Haubenwand (6) der Haube (1) sitzt der weitere Flansch (12), durch den (nicht dargestellte) Transportleitungen (18) verlaufen. Die Haube (1) fußt mit ihrer Öffnung (5) auf dem Flansch (7) des (nicht dargestellten) Betriebsstofftanks (2), wobei am Innenumfang (24) der Haube (1) ein Wulst (10) gezeigt ist, der in eine am Flansch (7) umlaufende Nut (11) eingreift. Die Öffnung (5) der Haube (1) umgreift radial außen den am Außenumfang (22) des Betriebsstofftanks (2) (nicht dargestellt) angeordneten Flansch (7). Der Sprengring (8) verläuft im Bereich der Haubenöffnung (5) am Außenumfang (23) der Haube (1) in einer den Sprengring (8) aufnehmenden Nut (9). In etwa gegenüberliegend zum weiteren Flansch (12) ist in der Haubenwand (6) ein Ausschnitt (15) vorgesehen, der in einem Winkel zur Haubenöffnung (5) verläuft und die Nut (9) durchsetzt. Der Ausschnitt (15) ist bogenförmig ausgebildet und gibt einen Zugang zu einer Transportleitung (18) frei, die aus dem Inneren des Betriebsstofftanks (2) herausragt. An der Unterseite des Flansches (7) des Betriebsstofftanks (2) sind Steig-/Fallrohre (17) einer Einrichtung zur Betriebstoffversorgung (4) erkennbar, die in den nicht dargestellten Betriebsstofftank (2) einmünden.

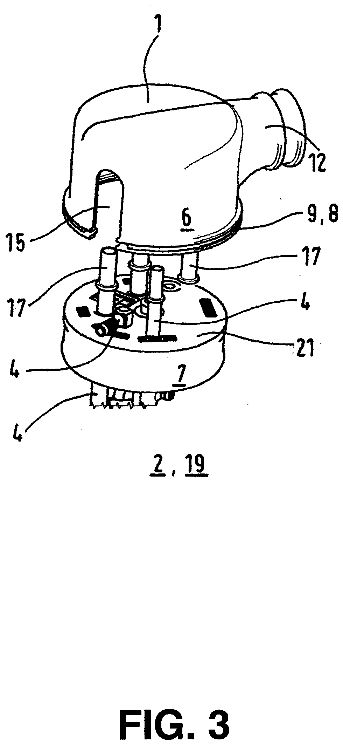

Fig. 3 unterscheidet sich von Fig. 2 dahingehend, dass die Haube (1) in einem Abstand über dem Flansch (7) des Betriebsstofftanks (2) (nicht dargestellt) dargestellt ist. Auf der der Haube (1) zugewandten Oberseite (21) des Flansches (7) ist die Einrichtung zur Betriebstoffversorgung (4) dargestellt. Diverse Steig-/Fallrohre (17) sind gezeigt, die den Flansch (7) durchsetzen und in die (nicht gezeigte) Innenseite (19) des Betriebsstofftanks (2) einmünden. An der seitlichen Haubenwand (6) ist der weitere Flansch (12) dargestellt, der einen (nicht gezeigten) Durchbruch (13) in der Außenwand (6) der Haube (1) radial umgreift. In etwa gegenüberliegend zum weiteren Flansch (12) ist der Ausschnitt (15) gezeigt, der einen weiteren Zugang zum Inneren der Haube (1) ermöglicht und gleichzeitig die Nut (9) durchsetzt, die den Sprengring (8) aufnimmt. In verbautem Zustand (20) überbrückt der Sprengring (8) die beiden Seiten der im Bereich des Ausschnitts (15) unterbrochenen Nut (9).

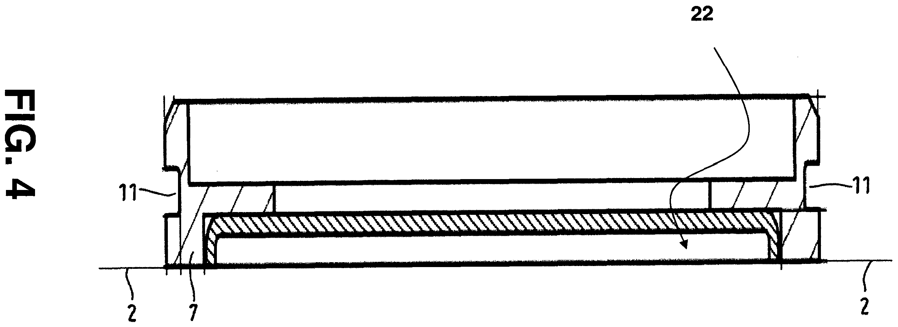

Fig. 4 zeigt seitlich geschnitten den am Außenumfang (22) des Betriebsstofftanks (2) angeordneten Flansch (7) mit der umlaufenden Nut (11). Die Nut (11) kommuniziert im verbauten Zustand (20) mit dem Wulst (10), der am Innenumfang (24) der nicht dargestellten Haube (1) im Bereich der Haubenöffnung (5) angebracht ist.

### BEZUGSZIFFERN

- 1: Haube
- 2: Betriebsstofftank
- 3: Tankwand
- 4: Einrichtung zur Betriebstoffversorgung
- 5: Öffnung der Haube
- 6: Haubenwand
- 7: Flansch des Betriebsstofftanks
- 8: Verschlussvorrichtung / Sprengring / Rasterband
- 9: Nut in der Haube
- 10: Wulst
- 11: Nut im Flansch
- 12: Weiterer Flansch
- 13: Durchbruch in der Haube
- 14: Spalt
- 15: Ausschnitt
- 16: Haubenboden
- 17: Steig-/Fallrohr
- 18: Transportleitung
- 19: Tankinnenseite
- 20: Verbauter Zustand
- 21: Oberseite Flansch
- 22: Außenumfang Betriebsstofftank
- 23: Außenumfang Haube
- 24: Innenumfang Haube

## Patentansprüche

1. Haube (1) zur Abdeckung einer am Außenumfang (22) eines Betriebsstofftanks (2) angeordneten und eine Tankwand (3) durchdringenden Einrichtung zur Betriebsstoffversorgung (4), die mit einer Öffnung (5) auf der Tankwand (3) aufliegt und bei der eine Haubenwand (6) im Bereich der Öffnung (5) einen, am Außenumfang (22) des Betriebsstofftanks (2) angeordneten Flansch (7) radial außen umgreift, **dadurch gekennzeichnet, dass** eine Verschlussvorrichtung (8) die Haubenwand (6) von außen radial an den Flansch (7) anpresst, und dass am Außenumfang (23) der Haube (1) ein weiterer Flansch (12) vorgesehen ist, der einen Durchbruch (13) in der Haubenwand (6) radial umgreift, und dass in dem weiteren Flansch (12) auf einer von einem Haubenboden (16) abgewandten Seite ein axialer Spalt (14) verläuft.

2. Haube nach Anspruch 1, **dadurch gekennzeichnet, dass** im Bereich der Öffnung (5) an einem Außenumfang (23) der Haube (1) eine, die Verschlussvorrichtung (8) aufnehmende Nut (9) vorgesehen ist und die Verschlussvorrichtung (8) ein Sprengring (8) ist.

3. Haube nach Anspruch 1, **dadurch gekennzeichnet, dass** im Bereich der Öffnung (5) an dem Außenumfang (23) der Haube (1) die, die Verschlussvorrichtung (8) aufnehmende Nut (9) vorgesehen ist und die Verschlussvorrichtung (8) ein Rasterband (8) ist.

4. Haube nach Anspruch 2 oder 3, **dadurch gekennzeichnet, dass** im Bereich der Nut (9) an einem Innenumfang (24) der Haube (1) ein Wulst (10) vorgesehen ist.

5. Haube nach Anspruch 4, **dadurch gekennzeichnet, dass** an einem Außenumfang des Flansches (7) eine umlaufende Nut (11) vorgesehen ist, die mit der Wulst (10) kommuniziert.

6. Haube nach einem oder mehreren der vorhergehenden Ansprüche in Verbindung mit Anspruch 2 oder 3, **dadurch gekennzeichnet, dass** sich in der Haubenwand (6) ein Ausschnitt (15) erstreckt, der in einem Winkel zur Öffnung (5) verläuft und die Nut (9) durchsetzt.

## Claims

1. A cap (1) for covering a fuel supply device (4) that is arranged at the outer periphery (22) of a fuel tank (2) and penetrates through a tank wall (3), which bears with an opening (5) on the tank wall (3) and in which a cap wall (6) engages radially externally, in the region of the opening (5), around a flange (7) arranged at the outer periphery (22) of the fuel tank (2), **characterized in that** a closure device (8) presses the cap wall (6) radially against the flange (7) from the outside, and **in that** a further flange (12) is provided at the outer periphery (23) of the cap (1), said flange (12) engaging radially around an aperture (13) in the cap wall (6), and **in that** an axial gap (14) extends in the further flange (12) on a side facing away from a cap bottom (16).

2. The cap according to Claim 1, **characterized in that**, in the region of the opening (5) at an outer periphery (23) of the cap (1), a groove (9) that receives the closure device (8) is provided and the closure device (8) is a snap ring (8).

3. The cap according to Claim 1, **characterized in that**, in the region of the opening (5) at the outer periphery (23) of the cap (1), the groove (9) that receives the closure device (8) is provided and the closure device (8) is a cable tie (8).

4. The cap according to Claim 2 or 3, **characterized in that**, in the region of the groove (9), a bead (10) is provided on an inner periphery (24) of the cap (1) .

5. The cap according to Claim 4, **characterized in that**, on an outer periphery of the flange (7), an encircling groove (11) is provided, which communicates with the bead (10).

6. The cap according to one of more of the preceding claims in conjunction with Claim 2 or 3, **characterized in that** a cutout (15) extends in the cap wall (6), said cutout (15) extending at an angle to the opening (5) and passing through the groove (9) .

## Revendications

1. Capot (1) pour recouvrir un dispositif d'alimentation en carburant (4) disposé à la périphérie extérieure (22) d'un réservoir de carburant (2) et traversant une paroi de réservoir (3), qui repose avec une ouverture (5) sur la paroi du réservoir (3) et dans lequel une paroi de capot (6) dans la région de l'ouverture (5) vient en prise radialement à l'extérieur autour d'une bride (7) disposée à la périphérie extérieure (22) du réservoir de carburant (2),
**caractérisé en ce qu'**un dispositif de fermeture (8) presse la paroi de capot (6) radialement depuis l'extérieur contre la bride (7) et **en ce qu'**une bride supplémentaire (12) est prévue à la périphérie extérieure (23) du capot (1), laquelle vient en prise radialement autour d'un orifice (13) dans la paroi de capot (6), et **en ce qu'**une fente axiale (14) s'étend dans la bride supplémentaire (12) sur un côté opposé à un fond du capot (16).

2. Capot selon la revendication 1, **caractérisé en ce que** dans la région de l'ouverture (5), au niveau d'une périphérie extérieure (23) du capot (1), est prévue une rainure (9) recevant le dispositif de fermeture (8), et le dispositif de fermeture (8) est un jonc (8).

3. Capot selon la revendication 1, **caractérisé en ce que** dans la région de l'ouverture (5), au niveau de la périphérie extérieure (23) du capot (1), est prévue la rainure (9) recevant le dispositif de fermeture (8), et le dispositif de fermeture (8) est une bande tramée (8).

4. Capot selon la revendication 2 ou 3, **caractérisé en ce que** dans la région de la rainure (9), au niveau d'une périphérie intérieure (24) du capot (1), est prévu un bourrelet (10).

5. Capot selon la revendication 4, **caractérisé en ce qu'**au niveau d'une périphérie extérieure de la bride (7) est prévue une rainure périphérique (11) qui communique avec le bourrelet (10).

6. Capot selon l'une quelconque ou plusieurs des revendications précédentes, en association avec la revendication 2 ou la revendication 3, **caractérisé en ce qu'**une découpe (15) s'étend dans la paroi de capot (6), laquelle s'étend suivant un certain angle par rapport à l'ouverture (5) et traverse la rainure (9).
